# EUROPÄISCHE PATENTANMELDUNG

(11) **EP 4 685 062 A1**
(43) Veröffentlichungstag der Anmeldung: **28.01.2026**
(21) Anmeldenummer: 24190125.5
(22) Anmeldetag: 22.07.2024
(51) Int. Cl.: B65B 57/02, B65B 55/24, B65B 69/00, B65B 55/00

(54) **AUSSCHLEUSEVORRICHTUNG UND VERFAHREN ZUR AUSSCHLEUSUNG VON ABFALLMATERIAL**

(71) Anmelder: TT Innovation AG, 6343 Rotkreuz (CH)
(72) Erfinder: Müller, Mathieu, 68510 Sierentz (FR); Zeller, Mike, 4246 Wahlen (CH)
(74) Vertreter: Mertzlufft-Paufler, Cornelius

(57) **Zusammenfassung**

Bei einer Ausschleusevorrichtung (12), mit der separierbares Abfallmaterial aus einer kontrollierten Umgebung (13) bringbar ist, wird erfindungsgemäß somit vorgeschlagen, dass eine Transferöffnung (20), die einen Abwurfbereich (18) von einem Entnahmebereich (21) für den Weg des Abfallmaterials (19) nach außen trennt, durch ein Verschlusselement (25) im Betrieb verschließbar ist, insbesondere um das Abfallmaterial (19) in einer Stapelanordnung zu sammeln.

## Beschreibung

Die Erfindung betrifft eine Ausschleusevorrichtung, mit einer kontrollierten Umgebung, wobei innerhalb der kontrollierten Umgebung wenigstens eine Verarbeitungsstation angeordnet ist, wobei ein Abwurfbereich für durch die Verarbeitungsstation separiertes Abfallmaterial ausgebildet ist, wobei außerhalb der kontrollierten Umgebung ein Entnahmebereich ausgebildet ist, wobei zwischen dem Abwurfbereich und dem Entnahmebereich eine Transferöffnung für das Abfallmaterial ausgebildet ist.

Die Erfindung betrifft weiter ein Verfahren zum Ausschleusen von Abfallmaterial, das in einer kontrollierten Umgebung separiert wird, wobei das Abfallmaterial durch eine Transferöffnung aus der kontrollierten Umgebung gebracht wird.

Kontrollierte Umgebungen sind bekannt und werden beispielsweise als Isolatoren, Restricted Access Barrier Systems (RABS), insbesondere vom offenen oder geschlossenen Typ, als Glovebox und allgemein als Containment verwendet.

Derartige kontrollierte Umgebungen dienen dazu, in industriellen Fertigungsschritten definierte Umgebungsbedingungen bereitzustellen, insbesondere in Bezug auf eine Reinheit von Oberflächen und/oder der Luft, in der das jeweilige Verfahren stattfinden soll, in Bezug auf eine Gaszusammensetzung und/oder eine Abwesenheit von vermehrungsfähigem oder sonstigem Material. Dies ist besonders, aber nicht nur, im Bereich der Verarbeitung von pharmazeutischen Produkten unerlässlich.

Ein Beispiel, das für die vorliegende Betrachtung sogar eine bevorzugte Anwendung ist, ist eine Befüllung von Behältern mit einem pharmazeutischen Präparat. Hierzu werden die Behälter und das pharmazeutische Präparat, beispielsweise eine Zubereitung in pulverförmiger oder flüssiger Form, in die kontrollierte Umgebung gebracht, um dort unter Ausschluss unerwünschter Verunreinigungen verarbeitet zu werden.

Hierbei ist es üblich geworden, die zu befüllenden Behälter in einer abgepackten Form steril in die kontrollierte Umgebung einzubringen und in der kontrollierten Umgebung auszupacken. Hierbei entsteht Abfallmaterial, welches von der Verpackung separiert wird und entsorgt werden muss.

Beispielsweise ist es bekannt, unbefüllte Behälter in Nestern in sogenannten Tubs bereitzustellen, wobei diese Tubs mit einer Abdeckung, beispielsweise aus Tyvek oder einem anderen semipermeablen Material versiegelt sind, um die so gebildete Verpackung der Behälter zu verschließen. Beim Entpacken der Behälter fällt diese Abdeckung als Abfallmaterial an, da diese Abdeckung entfernt oder separiert werden muss, um an die Behälter zu gelangen.

Hierbei ist es üblich geworden, diese separierten Abfallmaterialien durch schlitzförmige, im Prozess dauerhaft geöffnete Öffnungen, die in einer Begrenzung der kontrollierten Umgebung ausgebildet sind, nach außen zu fördern.

Die Erfindung befasst sich damit, den Prozess des Auspackens zu verbessern.

Erfindungsgemäß ist hierbei zur Lösung der Aufgabe bei einer Ausschleusevorrichtung die Merkmalskombination der Merkmale von Anspruch 1 vorgesehen. Insbesondere wird somit bei einer Ausschleusevorrichtung der eingangs beschriebenen Art zur Lösung der genannten Aufgabe erfindungsgemäß vorgeschlagen, dass der Entnahmebereich in einer weiteren kontrollierten Umgebung ausgebildet ist und dass die Transferöffnung verschließbar ist. Somit lässt sich eine negative Rückwirkung des Entnahmebereichs in den Bereich der kontrollierten Umgebung, in der die sensiblen Fertigungsprozesse ablaufen, weitestgehend ausschließen. Die Ausbildung des Entnahmebereichs in einer weiteren kontrollierten Umgebung hat den Vorteil, dass die Umgebungsbedingungen selbst nach Ausbringen des Abfallmaterials aus der kontrollierten Umgebung noch weiter kontrolliert werden können. Dies hilft es, eine Rückkontamination durch die Transferöffnung zu vermeiden. Die Verschließbarkeit der Transferöffnung bietet den Vorteil, dass die weitere kontrollierte Umgebung, also beispielsweise eine Vorkammer, einfach bereitstellbar ist, insbesondere durch eine Dekontamination, ohne dass eine Einwirkung auf die kontrollierte Umgebung, also beispielsweise eine Arbeitskammer, stattfinden muss. So kann in der Arbeitskammer beispielsweise ein Prozess ablaufen, ohne durch die Dekontamination in der weiteren kontrollierten Umgebung gestört zu werden.

Hierdurch wird der Prozess des Auspackens vereinfacht, da das Abfallmaterial in einer Weise aus der kontrollierten Umgebung herausgebracht werden kann, die eine Rückwirkung oder eine Kontamination der kontrollierten Umgebung weitestgehend ausschließt.

Das Abfallmaterial kann beispielsweise dadurch charakterisierbar sein, dass es bei einer Prozessierung aus einem Hauptstrang eines Materialflusses, der insbesondere zu einem fertigen Produkt oder einem Zwischenprodukt führen kann, abgezweigt wird. Dies schließt eine anschließende Weiterverwendung zu anderen Zwecken nicht aus. Eine nicht abschließende Liste von Beispielen für Abfallmaterial umfasst beispielsweise Verpackungsmaterial, Zwischeneinlagen, Abschnitte (die möglicherweise beim Entpacken entstehen), Beutel, Folien, Tyvek-Folien, Werkzeuge, Monitoring-Equipment und Musterzugteile (zu einer Überprüfung oder Dokumentation eines Batches).

Die kontrollierte Umgebung kann beispielsweise ein Isolator sein. Weitere kontrollierte Umgebungen können beispielsweise abgedichtete oder abdichtbare Kammern sein, auch Containments oder RABS in beispielsweise offener oder geschlossener Bauform oder Gloveboxes.

Bei einer Ausgestaltung der Erfindung kann vorgesehen sein, dass die Verarbeitungsstation zur Separierung von Abfallmaterial, das jeweils drei räumliche Abmessungen aufweist, ausgebildet ist, wobei eine Kontur der Transfereröffnung auf zwei größte Abmessungen des Abfallmaterials abgestimmt ist. Dies ermöglicht es beispielsweise, das Abfallmaterial, wenn es im Wesentlichen zweidimensional ist, möglichst schnell durch die Transferöffnung zu transportieren. Dies hilft zusätzlich einen Kontakt und somit einen Austausch zwischen der kontrollierten Umgebung und der weiteren kontrollierten Umgebung so gering wie möglich zu halten.

Bei einer Ausgestaltung der Erfindung kann vorgesehen sein, dass eine kleinste Abmessung des Abfallmaterials einen Bruchteil von einer minimalen lichten Weite der Transferöffnung beträgt. Die Erfindung macht sich zunutze, dass die Querschnittsfläche einer Transferöffnung vergleichsweise groß gewählt werden kann, da hinter der Transfereröffnung eine weitere kontrollierte Umgebung ausgebildet ist und außerdem die Transferöffnung verschließbar ist.

Besonders günstig ist es, wenn die minimale lichte Weite wenigstens ein zweihundertfaches, vorzugsweise wenigstens ein fünfhundertfaches der kleinsten Abmessung des Abfallmaterials beträgt. Somit lassen sich einfach blattförmige Abfallmaterialien in gestapelter Form durch die Transferöffnung ausbringen.

Bei einer Ausgestaltung der Erfindung kann vorgesehen sein, dass der Abwurfbereich durch einen Sammelkorb begrenzt ist. Somit ist ein Sammeln des Abfallmaterials, insbesondere innerhalb eines begrenzten Bereichs, einfach ausführbar. Dies erleichtert ein Ausbringen der gesammelten Abfallmaterialien durch die Transferöffnung. Bevorzugt ist der Sammelkorb nach unten offen, was eine Entleerung durch Wirkung der Gravitationskraft ermöglicht.

Bei einer Ausgestaltung der Erfindung kann vorgesehen sein, dass der Sammelkorb wenigstens eine seitliche Öffnung aufweist. Von Vorteil ist dabei, dass ein Luftstau zwischen übereinander abgeworfenen Abfallmaterialien verhinderbar ist, und dass auch eine ohnehin vorhandene laminare Luftströmung oder allgemeine Luftströmung in der kontrollierten Umgebung zur Förderung der Abfallmaterialien in den Sammelkorb nutzbar ist, beispielsweise indem es das Abfallmaterial in den Sammelkorb hinein drückt.

Ein Sammelkorb kann beispielsweise als eine Vorrichtung charakterisiert sein, welche eine Ausbreitung von abgeworfenem Material zumindest quer zu einer Abwurfrichtung begrenzt.

Bei einer Ausgestaltung der Erfindung kann vorgesehen sein, dass das Abfallmaterial eine dichte (z.B. gasdichte) und/oder semipermeable Folie ist, welche von einem Tub separiert wurde. Die Verarbeitung von Tubs, die mit einer semipermeablen Folie beispielsweise aus Tyvek versiegelt sind, stellt eine bevorzugte Anwendung der beschriebenen Erfindung dar. Es ist üblich, derartige Tubs dadurch zu verarbeiten, dass die (semipermeable/gasdichte/sonstige) Folie abgezogen oder ausgeschnitten wird. Die separierte Folie ergibt dann ein Beispiel für das bereits erwähnte Abfallmaterial. Bevorzugt ist die semipermeable Folie für Mikroorganismen undurchlässig und für gasförmiges und/oder vernebeltes Wasserstoffperoxid oder andere Gase durchlässig.

Die Erfindung ist besonders geeignet für den Einsatz bei der Verarbeitung von stapelbarem Abfallmaterial, insbesondere blattförmigen Objekten, wie dies beispielhaft auch durch die beschriebene Folie gegeben ist.

Bei einer Ausgestaltung der Erfindung kann vorgesehen sein, dass die kontrollierte Umgebung einen verschließbaren Zugang aufweist, an welche von außen eine mit dem Abfallmaterial verschlossene Verpackung präsentierbar ist. Dies ermöglicht es, sehr platzsparend und insbesondere ohne eine zusätzliche Schleuse einen Innenraum der Verpackung, insbesondere ein Nest mit (unbefüllten und/oder offenen) pharmazeutischen Behältern wie Vials, Spritzen, Karpulen und dergleichen, in die kontrollierte Umgebung zu verbringen, wobei das in die kontrollierte Umgebung verbrachte Material minimal gehalten wird. Insbesondere ist es auf diese Weise nicht erforderlich, das Tub oder die Verpackung als Ganzes in die kontrollierte Umgebung zu verbringen.

Typischerweise entsteht hierbei Abfallmaterial, insbesondere die bereits erwähnten Folien, wenn als Behälterteil Tubs verarbeitet werden.

Alternativ oder zusätzlich sieht die Erfindung zur Lösung der genannten Aufgabe die Merkmale wie im zweiten unabhängigen Anspruch vorgeschlagen vor. Insbesondere wird somit bei einer Ausschleusevorrichtung nach der eingangs beschriebenen Art erfindungsgemäß zur Lösung der Aufgabe vorgeschlagen, dass der Entnahmebereich im Einwirkbereich einer Dekontaminationsvorrichtung angeordnet ist. Somit ist eine Kontamination des Entnahmebereichs während der Entleerung des Entnahmebereichs nach außen einfach beseitig bar. Es ist somit ein zweistufiger Ausschleuseprozess realisierbar, bei dem das Abfallmaterial zunächst durch die Transferöffnung in den Entnahmebereich und von dort nach außen geführt wird, wobei nach dem Abschluss der Ausschleusung der Gebrauchszustands des Entnahmebereichs wiederhergestellt werden kann.

Diese Ausgestaltung ist auch mit den vorangehend beschriebenen Ausgestaltungen kombinierbar. Dies ermöglicht eine einfache Wiederherstellung von definierten Umgebungsbedingungen im Entnahmebereich unabhängig von der kontrollierten Umgebung.

Hierbei kann es günstig sein, wenn der Entnahmebereich in einer weiteren kontrollierten Umgebung, beispielsweise der bereits beschriebenen weiteren kontrollierten Umgebung, ausgebildet ist. Von Vorteil ist dabei, dass eine Dekontaminationsvorrichtung den Entnahmebereich dekontaminieren kann, ohne dass weitere Umgebungsbereiche betroffen sind.

Die weitere kontrollierte Umgebung kann hierbei unabhängig von der zuvor erwähnten kontrollierten Umgebung definierbar sein. Hier können unterschiedliche Reinheitsklassen, unterschiedliche Druckverhältnisse oder unterschiedliche Strömungsverhältnisse oder andere Umgebungsparameter gewählt sein. Nach einem Öffnen der Transferöffnung bzw. des Verschlusselements können die Parameter / Reinheitsklassen in den beiden nun zu einem Raum verschmolzenen kontrollierten Umgebungen dieselben sein.

Bei einer Ausgestaltung der Erfindung kann vorgesehen sein, dass die Dekontaminationsvorrichtung bei verschlossener Transfertür aktivierbar ist. Somit kann auf einfache Weise verhindert werden, dass bei einer Dekontamination die ursprüngliche kontrollierte Umgebung beeinträchtigt wird, da die Dekontamination nur ausführbar ist, wenn die Transferöffnung verschlossen ist. Es ist auch denkbar, bei einer initialen Dekontamination bei geöffneter Transferöffnung jeweils Dekontaminationsvorrichtungen auf beiden Seiten der Transferöffnung zu betätigen.

Bei einer Ausgestaltung der Erfindung kann vorgesehen sein, dass die Dekontaminationsvorrichtung bei geöffneter Transferöffnung gesperrt ist. Dies stellt ein weiteres Mittel dar, zu verhindern, dass eine Dekontamination durchgeführt wird für den Entnahmebereich, die die kontrollierte Umgebung des Hauptbereichs beeinträchtigt.

Bei einer Ausgestaltung der Erfindung kann vorgesehen sein, dass der Entnahmebereich tiefer als der Abwurfbereich angeordnet ist. Somit kann eine Förderung durch die Transferöffnung aufgrund der Einwirkung von Gravitationskraft und somit ohne weitere bewegliche Teile erfolgen.

Alternativ oder zusätzlich kann vorgesehen sein, dass der Entnahmebereich in Bezug auf eine Luftströmungsrichtung der kontrollierten Umgebung im Abwurfbereich nachgelagert ist. Somit kann die Luftströmung benutzt werden, um eine Förderung des Abfallmaterials in den Entnahmebereich oder durch die Transferöffnung zu befördern.

Es kann hierbei auch vorgesehen sein, dass die Luftströmung einen Kreislauf bildet, der vor der Transferöffnung verbleibt, solange die Transferöffnung verschlossen ist, und dass der Kreislauf vergrößert wird, wenn die Transferöffnung sich öffnet.

Bei einer Ausgestaltung der Erfindung kann vorgesehen sein, dass der Entnahmebereich durch eine verschließbare Öffnung von außen zugänglich ist. Dies ermöglicht es, den Entnahmebereich nach außen zu schützen, damit nicht unerwünschte Kontaminationen in den Entnahmebereich eingetragen werden. Somit kann der Entnahmebereich gereinigt oder dekontaminiert werden kann, ohne dass die Umgebung beeinträchtigt ist.

Am günstigsten ist es hierbei, wenn die Öffnung luftdicht verschließbar ist. Dies ist ein einfaches Mittel, um zu verhindern, dass Dekontaminationsmittel austreten.

Bei einer Ausgestaltung der Erfindung kann vorgesehen sein, dass die Verarbeitungsstation ein Werkzeug zur Separierung des Abfallmaterial aufweist. Eine automatische Verarbeitung ist somit ermöglicht, ohne dass manuell eingegriffen werden muss. Insbesondere kann dieses Werkzeug einen Schneider aufweisen. Dies ermöglicht ein Separieren des Abfallmaterials durch Schneiden. Alternativ oder zusätzlich kann dieses Werkzeug einen Greifer aufweisen. Dies ermöglicht es, das Abfallmaterial durch Abziehen zu separieren.

Bevorzugt ist das Abfallmaterial hierbei die Abdeckung einer Verpackung, beispielsweise eines wannenförmigen Behältnisses, insbesondere des bereits erwähnten Tubs.

Bei einer Ausgestaltung der Erfindung kann vorgesehen sein, dass der Abwurfbereich mehrere Stücke von Abfallmaterialien aufnehmen und/oder bevorraten kann. Dies ermöglicht es, die Transferöffnung so selten wie möglich zu öffnen, um hier eine Rückwirkung auf die kontrollierte Umgebung nach Möglichkeit auszuschließen und den Dekontaminationsprozess in der weiteren kontrollierten Umgebung nur selten laufen zu lassen, da die Dekontamination zeitintensiv sein kann.

Bei einer weiteren Ausgestaltung kann vorgesehen sein, dass sich in der weiteren kontrollierten Umgebung eine, vorzugsweise verschließbare, Ablufteinrichtung befindet. Diese kann einen Filter, beispielsweise eine Filterpatrone, aufweisen. Dies ermöglicht beispielsweise eine Druckregelung in der kontrollierten Umgebung und/oder lässt sich (daher) nutzen, um definierte Strömungsverhältnisse an der Transferöffnung zu schaffen.

Diese gesammelte Ausfuhr von Abfallmaterialien ist besonders dann günstig, wenn die Abfallmaterialien flächig ausgebildet sind und sich somit gut stapeln lassen.

Bei einer Ausgestaltung der Erfindung kann vorgesehen sein, dass ein Hauptstrang des Materialflusses definiert ist und in dem Hauptstrang wenigstens eines der nachstehenden Merkmale, insbesondere mehrere oder alle der nachstehenden Merkmale, ausgebildet sind:
- wenigstens eine magnetisch levitierbare Transporteinheit ist in der kontrollierten Umgebung angeordnet,
- wenigstens eine Befüllstation ist in der kontrollierten Umgebung angeordnet,
- wenigstens eine Dekontaminationsvorrichtung von zumindest Teilen des Abfallmaterials vor der Separierung ist ausgebildet,
- der Hauptstrang ist zur Ausführung eines pharmazeutischen Prozesses ausgebildet, vorzugsweise zum Befüllen eines Behältnisses.

Somit ist die erfindungsgemäße Ausschleusevorrichtung bei einem pharmazeutischen Prozess einsetzbar. Die Verwendung einer magnetisch levitierbaren Transporteinheit (als Teil eines Planarmotors, beispielsweise des Systems "Xplanar" der Beckhoff Automation GmbH & Co. KG aus Verl in Deutschland oder des Systems "ctrlX FLOW^{6D}" der Bosch Rexroth AG aus Lohr am Main in Deutschland) hat den Vorteil, dass im Transport möglichst wenig Partikel aufgewirbelt werden oder erzeugt werden. Dies ist vorteilhaft für die erfindungsgemäße Ausschleusung nutzbar.

Die Verwendung einer Befüllstation hat den Vorteil, dass Befüllvorgänge ausführbar sind. Die Ausschleusevorrichtung ist hierbei vorteilhaft zum Ausschleusen von Abfallmaterial, mit denen zu befüllenden Behälter abgedeckt oder verpackt sind, verwendbar.

Die Verwendung einer Dekontaminationsvorrichtung zum Dekontaminieren von zumindest Teilen des Abfallmaterials vor der Separierung hat den Vorteil, dass das Abfallmaterial vor der Separierung als äußere Verpackung der zu schützenden Gegenstände, die in der kontrollierten Umgebung bearbeitet werden sollen, verwendbar ist. Beispielsweise kann die Dekontaminationsvorrichtung zur Dekontamination mit energiereicher Strahlung, insbesondere UVC-Strahlung und/oder anderer elektromagnetischer und/oder Elektronen-Strahlung (z. B. e-Beam), eingerichtet sein. Diese Bestrahlung hat unter anderem den Vorteil, dass sie schnell ist und/oder möglichst wenige Rückstände des Dekontaminationsvorgangs am Abfallmaterial verbleiben. Dadurch wird das Abfallmaterial einfacher verarbeitbar.

Allgemein kann gesagt werden, dass die Erfindung gut einsetzbar ist in einem pharmazeutischen Prozess, beispielsweise einer Verarbeitung pharmazeutischer Behälter, insbesondere einem Befüllen in einer kontrollierten Umgebung dieser Behälter, wobei manuelle Eingriffe reduziert oder ganz eliminiert werden. Hierdurch lässt sich die Fehlerquote in der Produktion senken.

Bei einer Ausgestaltung der Erfindung kann vorgesehen sein, dass die Verarbeitungsstation einen Greifer mit einer veränderlichen Greifweite hat. Von Vorteil ist dabei, dass mit dem Greifer unterschiedliche Verarbeitungsschritte, insbesondere unterschiedliche Separierungen von mehreren Abfallmaterialien nacheinander ausführbar sind. Beispielsweise kann so eine versiegelte Abdeckung entfernt werden und anschließend eine darunterliegende zusätzliche Abdeckung in Form eines Einlegeblattes. Auch ist es so möglich, mit dem Greifer auch nachfolgende Bearbeitungsschritte wie das Entnehmen eines Nestes oder das Entnehmen von Behältern aus dem Nest auszuführen.

Besonders günstig ist es, wenn die veränderliche Greifweite durch eine Relativbewegung von wenigstens zwei Greifpunkten zueinander erfolgt. Somit ist eine mechanisch einfach handhabbare Lösung geschaffen.

Alternativ oder zusätzlich kann vorgesehen sein, dass die Verarbeitungsstation eine Unterdruckeinheit zur Erzeugung von Unterdruck an einem, beispielsweise den bereits erwähnten, Greifer hat. Diese Art des Greifens mit Unterdruck ist besonders günstig bei flächenhaften Abfallmaterialien. Eine unkontrollierte Faltung oder Knickung des Abfallmaterials, die eine nachfolgende automatisierte Ausschleusung erschweren oder behindern würde, ist somit vermeidbar. Die Unterdruckeinheit kann beispielsweise vom mitbewegten Typ sein oder stationär ausgebildet sein. Der Unterdruck kann über einen Schlauch oder mehrere Schläuche an den Greifer vermittelt sein.

Zur Lösung der genannten Aufgabe sind erfindungsgemäß alternativ oder zusätzlich die Merkmale des unabhängigen Verfahrensanspruchs vorgesehen. Insbesondere wird somit bei einem Verfahren der eingangs beschriebenen Art erfindungsgemäß vorgeschlagen, dass das Abfallmaterial vor der Transferöffnung gesammelt und anschließend aus der kontrollierten Umgebung verbracht wird. Somit ist es möglich, eine Rückwirkung, die während des Transfers aus der kontrollierten Umgebung zumindest theoretisch nie ganz ausschließbar ist, möglichst gering zu halten, indem nicht jedes Abfallmaterial gesondert aus der kontrollierten Umgebung verbracht wird.

Besonders günstig ist es dabei, wenn das Abfallmaterial vor der Transferöffnung als Stapelanordnung gesammelt wird. Von Vorteil ist dabei, dass eine Stapelanordnung zum Einen einen begrenzten Platzbedarf hat und zum Anderen eine ordnungsgemäße Weiterverarbeitung von flächenartigen Abfallmaterial erlaubt. Besonders günstig ist es, wenn das gesammelte Abfallmaterial gemeinsam aus der kontrollierten Umgebung verbracht wird. Von Vorteil ist dabei, dass eine Zeit für eine Ausschleusung gering gehalten werden kann.

Besonders günstig ist, wenn das Abfallmaterial anschließend (nach dem Sammeln) aus der kontrollierten Umgebung verbracht wird. Das Ausbringen des Abfallmaterials nach dem Sammeln hat den Vorteil, dass möglichst wenige Öffnungen der Transferöffnung erforderlich sind.

Alternativ oder zusätzlich werden zur Lösung der genannten Aufgabe erfindungsgemäß die Merkmale des zweiten unabhängigen Verfahrensanspruchs vorgeschlagen. Insbesondere wird somit bei einem Verfahren der eingangs beschriebenen Art erfindungsgemäß vorgeschlagen, dass die Transferöffnung zwischen zwei aufeinanderfolgenden Ausschleusungen geschlossen wird. Dies ermöglicht es auf einfache Weise, jenseits der Transferöffnung nach Entnahme des ausgeschleusten Abfallmaterials eine Dekontamination oder dergleichen Maßnahme zur Wiederherstellung des ursprünglichen Zustandes des Entnahmebereichs durchzuführen, ohne dass die kontrollierte Umgebung beinträchtig werden muss.

Besonders günstig ist es dabei, wenn die Transferöffnung automatisch geschlossen wird. Dies verhindert das Auftreten von Einzelfehlern bei der manuellen Bearbeitung.

Bei einer Ausgestaltung der Erfindung kann vorgesehen sein, dass das Abfallmaterial vor der Verbringung durch die Transferöffnung auf einer Ablage gesammelt wird. Somit ist eine platzsparende Art des Sammelns und insbesondere das Bilden einer Stapelanordnung beschrieben. Besonders günstig ist es, wenn die Ablage, auf der das Sammeln stattfindet, ein Verschlusselement der Transferöffnung ist. Von Vorteil ist dabei, dass eine weitere Manipulation des gesammelten Abfallmaterials nicht erforderlich ist. Vielmehr ermöglicht es diese Ausgestaltung, ein Ausbringen aus der kontrollierten Umgebung durch Öffnen des Verschlusselements einzuleiten.

Bei einer Ausgestaltung der Erfindung kann vorgesehen sein, dass das Abfallmaterial in einen Entnahmebereich hinter der Transferöffnung verbracht und von dort nach außen genommen wird und dass der Entnahmebereich vor Entnehmen des Abfallmaterials gegen die kontrollierte Umgebung verschlossen wird. Hiermit ist auf einfache Weise eine Kontamination der kontrollierten Umgebung aufgrund von Handhabungen des Abfallmaterials im Entnahmebereich verminderbar oder gänzlich ausschließbar. Besonders günstig ist es hier, wenn die kontrollierte Umgebung automatisch verschlossen wird vor Entnehmen des Abfallmaterials aus dem Entnahmebereich. Dies ermöglicht es, Bedienfehler zu reduzieren.

Bei einer Ausgestaltung der Erfindung kann vorgesehen sein, dass der Entnahmebereich nach Entnehmen des Abfallmaterials dekontaminiert wird. Somit sind auf einfache Weise Kontaminationsgefahren, die sich durch eine Entnahme von Abfallmaterial aus dem Entnahmebereich ergeben könnten, eliminierbar. Besonders günstig ist es, wenn die Dekontamination bei verschlossener Transferöffnung erfolgt. Somit ist eine Beeinträchtigung der kontrollierten Umgebung durch Dekontaminationsschritte außerhalb der kontrollierten Umgebung (innerhalb des Entnahmebereichs) reduzierbar oder gänzlich ausschließbar.

Bei einer Ausgestaltung der Erfindung kann vorgesehen sein, dass das Abfallmaterial von einer Verpackung separiert wird. Somit sind typische Verfahrens- oder Verarbeitungsschritte von Befüllvorgängen oder Verarbeitungen pharmazeutischer Substanzen und pharmazeutischer Behälter implementierbar.

Besonders günstig ist es, wenn das Abfallmaterial als Abdeckung und/oder Zwischeneinlage eines Tubs oder ein Inhalt, beispielsweise ein Nest, ist. Es ist offensichtlich, dass das erfindungsgemäße Verfahren bei unterschiedlichen Teilschritten eines pharmazeutischen Prozesses implementierbar ist. Beispielsweise kann die erwähnte Verpackung ein Tub sein oder aufweisen. Dies eröffnet viele Anwendungen bei der Befüllung von pharmazeutischen Behältern, die in (versiegelten) Tubs bereitgestellt werden.

Bei einer Ausgestaltung der Erfindung kann vorgesehen sein, dass die Separierung des Abfallmaterial automatisiert erfolgt. Dies hilft, manuelle Bearbeitungsvorgänge in der kontrollierten Umgebung zu reduzieren oder sogar ganz zu vermeiden, es kann aber auch eine manuelle Separierung stattfinden, beispielsweise über Handschuheingriffe in Schulterringen (Glove ports).

Beispielsweise kann diese automatisierte Separierung durch ein Roboter- oder ein Handlingsystem erfolgen. Somit sind komplexere Bearbeitungsschritte ohne manuellen Eingriff und in hohen Taktzeiten realisierbar.

Bei einer Ausgestaltung der Erfindung kann vorgesehen sein, dass während der Ausbringung des Abfallmaterial zuerst das Verschlusselement verschlossen und anschließend eine Tür eines, insbesondere des bereits erwähnten, Entnahmebereichs geöffnet wird. Somit ist eine Schleusenfunktion realisierbar.

Besonders günstig ist es, wenn die Tür nach außen geöffnet wird. Auf diese Weise kann ein Kontaminationseintrag durch die Transferöffnung besonders gering gehalten werden. Eine Öffnung der Transferöffnung nach außen hat den zusätzlichen Vorteil, dass Kollisionen zwischen einem Verschlusselement und dem gesammelten Abfallmaterial in einer Stapelanordnung vermeidbar sind. Dies hilft, Platz in der kontrollierten Umgebung einzusparen.

Bei einer Ausgestaltung der Erfindung kann vorgesehen sein, dass zwischen dem Entfernen des Abfallmaterial und dem Entnehmen des Abfallmaterials aus dem Entnahmebereich zumindest ein, insbesondere mehrere oder alle, der folgenden Schritte durchgeführt wird/werden
a. Greifen des Abfallmaterial zumindest während der Separierung,
b. Bewegen des Abfallmaterials zum Abwurfbereich, insbesondere zu einem, beispielsweise dem bereits erwähnten, Sammelkorb, vorzugsweise mittels Roboter- oder Handlingeinheit,
c. Lagerung, vorzugsweise in einem, beispielsweise den bereits erwähnten, Sammelkorb, vorzugsweise im Abwurfbereich,
d. Öffnen eines die Transferöffnung verschließenden Verschlusselements vorzugsweise nach außen,
e. vertikales Durchführen durch ein temporär geöffnetes Verschlusselement der Transferöffnung,
f. Verschließen des Verschlusselements,
g. Öffnen einer den Entnahmebereich nach außen abschließenden Tür, beispielsweise der bereits erwähnten Tür, vorzugsweise nach außen, (beispielsweise zur Entnahme des Abfallmaterials aus dem Entnahmebereich)
h. Dekontaminieren einer Außenseite der Transferöffnung (vorzugsweise nach Schließen der Tür aus Schritt g.).

Einzelne Schritte können bei weiteren Ausgestaltungen hierbei weggelassen sein oder in abgeänderter Reihenfolge ausgeführt werden.

Hierbei kann durch das Bewegen des Abfallmaterials zum Abwurfbereich der Verarbeitungsbereich an der Verarbeitungsstation möglichst schnell freigemacht werden.

Eine Lagerung des Abfallmaterials in einem, beispielsweise den bereits erwähnten, Sammelkorb, der beispielsweise den Abwurfbereich definieren kann, hat den Vorteil, dass auf einfache Weise eine Stapelanordnung des Abfallmaterials ausbildbar ist.

Ein vertikales Durchführen an der Transferöffnung hat den Vorteil, dass der Transfer oder das Ausschleusen durch Einwirkung der Gravitationskraft bewirkbar ist.

Beispielsweise kann hierbei vorgesehen sein, dass das Verschlusselement nur temporär geöffnet ist. Dies ermöglicht es, Schließzeiten der Transferöffnung zu definieren, in denen zugehörige Verfahrensschritte ausführbar sind. Ein Prozessschritt kann die Dekontamination des Entnahmebereichs sein. Ein Verschließen des Verschlusselements hat den Vorteil, dass eine Einwirkung eines Prozessschrittes aus dem Entnahmebereich in die kontrollierte Umgebung vermeidbar ist. Besonders günstig ist es, wenn hierbei der Entnahmebereich in einer weiteren kontrollierten Umgebung angeordnet ist.

Das Öffnen eines die Transferöffnung verschließenden Verschlusselements nach außen in Bezug auf die kontrollierte Umgebung hat den Vorteil, dass eine Rekontamination durch nach innen schwenkende Verschlusselemente vermeidbar ist. Auch ist so der Platzbedarf der Ausschleusevorrichtung im Inneren der kontrollierten Umgebung reduzierbar, insbesondere weil das Verschlusselement dann nicht dem gestapelten Abfallmaterial ausweichen muss. Es kann aber auch je nach Platzaufteilung in der kontrollierten Umgebung günstig sein, wenn sich das Verschlusselement nach innen in die kontrollierte Umgebung öffnen lässt.

Das Öffnen einer den Entnahmebereich nach außen abschließenden Tür nach außen hat den Vorteil, dass der Entnahmebereich möglichst frei gestaltbar ist. Dies erleichtert es, den Entnahmebereich nach Entnahme des Abfallmaterials wieder zu dekontaminieren.

Das Dekontaminieren einer Außenseite der Transferöffnung (und damit beispielsweise auch des Verschlusselements) hat den Vorteil, dass somit auf einfache Weise der Entnahmebereich dekontaminierbar ist, ohne dass eine Beeinträchtigung der kontrollierten Umgebung, bei der Präparate sensitiv auf das Dekontaminationsverfahren reagieren, möglich ist.

Bei einer Ausgestaltung der Erfindung kann vorgesehen sein, dass ein Hauptstrang eines Materialflusses mittels wenigstens einer magnetisch levitierten Transporteinheit (beispielsweise wie zuvor beschrieben) gefördert wird. Die Erfindung macht sich zunutze, dass ein Großteil der Prozessschritte mit einer magnetisch levitierbaren Transporteinheit in der kontrollierten Umgebung realisierbar ist. Dies vermindert den Eintrag von Partikeln, die aus beweglichen Teilen bei einem notwendigen Transport resultieren können, zu reduzieren.

Bei einer Ausgestaltung der Erfindung kann vorgesehen sein, dass in einem Hauptstrang, beispielsweise dem bereits erwähnten Hauptstrang, eines Materialflusses wenigstens eine Befüllstation angefahren wird. Die Erfindung ist somit besonders bevorzugt im Bereich der pharmazeutischen Befüllung von Behältnissen realisierbar.

Bei einer Ausgestaltung der Erfindung kann vorgesehen sein, dass das Abfallmaterial vor der Separation in einem Hauptstrang des Materialflusses, beispielsweise den bereits erwähnten Hauptstrang, dekontaminiert wird, insbesondere durch energiereiche Strahlung wie beispielsweise UVC-Strahlung. Von Vorteil ist dabei, dass eine Verpackung zumindest teilweise außerhalb der kontrollierten Umgebung verbleiben kann und nicht mit einer Umverpackung (z.B. bag) eingeschleust werden muss. Die Erfindung hat erkannt, dass es möglich ist, nur einen Teil der Verpackung in die kontrollierte Umgebung hinein zu holen, indem (nur) dieser Teil (hier bspw. die Abdeckung) vor Öffnen der kontrollierten Umgebung dekontaminiert wird.

Bei einer Ausgestaltung der Erfindung von möglicherweise eigenständiger erfinderischer Qualität kann bei einem Verfahren der eingangs beschriebenen Art oder bei einem der vorangehenden Ausgestaltungen vorgesehen sein, dass das Abfallmaterial mit einem Greifer separiert wird und dass nach der Separierung des Abfallmaterials in einem, beispielsweise dem bereits erwähnten, Hauptstrang des Materialflusses der Greifer einen weiteren Greifschritt mit einer veränderten Greifweite ausführt. Von Vorteil ist dabei, dass unterschiedliche Formatteile oder unterschiedliche ineinander verschachtelte Abdeckungen und Abfallmaterialien verarbeitbar sind.

Bei einer Ausgestaltung der Erfindung von möglicherweise eigenständiger erfinderischer Qualität kann bei einem Verfahren der eingangs beschriebenen Art oder bei einem der vorangehenden Ausgestaltungen vorgesehen sein, dass ein Abfallmaterial separiert wird und dass das Abfallmaterial mit einem, beispielsweise dem bereits erwähnten, Greifer separiert wird, wobei ein Unterdruck zum Greifen mit einer Unterdruckeinheit erzeugt wird. Besonders günstig ist es, wenn diese Unterdruckeinheit mit dem Greifer gemeinsam verfahrbar angeordnet ist, beispielsweise auf der bereits erwähnten Handlingeinheit oder dem bereits erwähnten Roboter.

Die Separation des Abfallmaterials mit einem durch Unterdruck beaufschlagten Greifer hat den Vorteil, dass möglichst wenig bewegliche Teile in der kontrollierten Umgebung erforderlich sind. Zudem bietet ein mit Unterdruck beaufschlagter Greifer einen möglichst geringen Partikeleintrag aufgrund des Greifens und ist auch für schwer fassbare Materialien geeignet (zum Beispiel bei Materialien, die leicht knittern).

Bei einer Ausgestaltung der Erfindung kann vorgesehen sein, dass eine Taktrate des Separierens des Abfallmaterials größer als eine Taktrate einer Aufschleusung des Abfallmaterials ist. Somit ist ein Verfahren beschrieben, bei dem die Ausschleusung des anfallenden Abfallmaterials flexibler wählbar ist. Ein Sammeln von Abfallmaterial vor der Ausschleusung kann sich so auf einfache Weise ergeben.

Die Erfindung wird nun anhand von Ausführungen näher beschrieben, ist jedoch nicht auf diese Ausführungen beschränkt. Weitere Ausführungsbeispiele ergeben sich durch Kombination der Merkmale einzelner oder mehrerer Ansprüche und/oder mit einzelnen oder mehreren Merkmalen der Ausführungsbeispiele.

Es zeigt:
- Fig. 1: eine Explosionsdarstellung eines pharmazeutischen Behältnisses,
- Fig. 2: das intakte pharmazeutische Behältnis aus Figur 1 in einer schematischen Längsschnittdarstellung,
- Fig. 3: eine Prinzipdarstellung einer kontrollierten Umgebung mit einer erfindungsgemäßen Ausschleusevorrichtung,
- Fig. 4: die Anordnung gemäß Figur 3 während eines Ausschleusevorgangs für Abfallmaterial,
- Fig. 5: die Entnahme des Abfallmaterials aus dem Entnahmebereich bei einer Anordnung gemäß Figur 3,
- Fig. 6: eine weitere Anordnung zur Realisierung der Erfindung mit einer Darstellung der Strömungsverhältnisse,
- Fig. 7: eine weitere Anordnung, mit einer Darstellung des Materialflusses im Hauptstrang, wobei der Entnahmebereich dekontaminiert wird und im Abwurfbereich Abfallmaterialien gesammelt werden und weiterer Stationen des Hauptstranges der Verarbeitung in der kontrollierten Umgebung,
- Fig. 8: die Anordnung gemäß Figur 7 nach Öffnung der Transferöffnung,
- Fig. 9: eine weitere Anordnung zur Realisierung des erfindungsgemäßen Verfahrens und der erfindungsgemäßen Vorrichtung, wobei eine horizontalorientierte Ausschleusung vorgesehen ist,
- Fig. 10: die Anordnung gemäß Figur 9 nach dem Ausschleusen und vor der Entnahme des Abfallmaterial und
- Fig. 11: ein Beispiel eines Werkzeugs aus einer der vorangehenden Figuren.

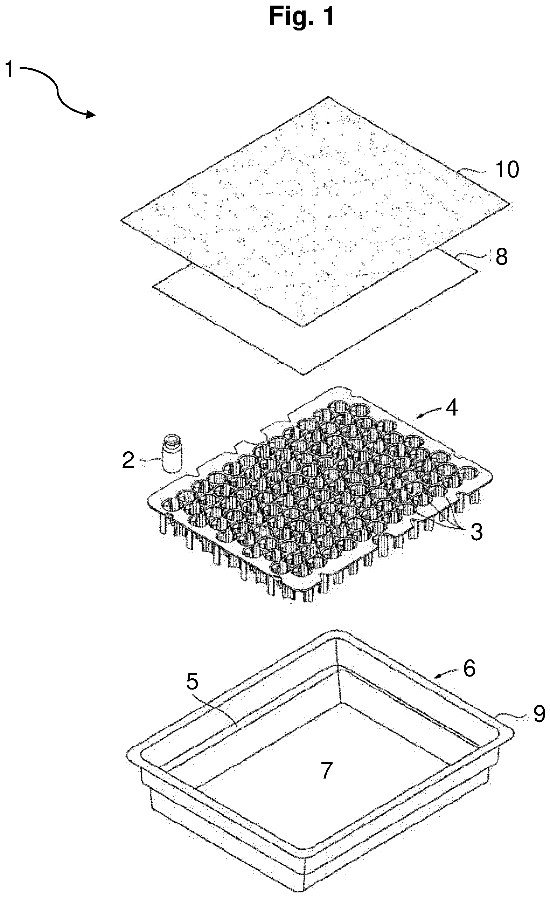

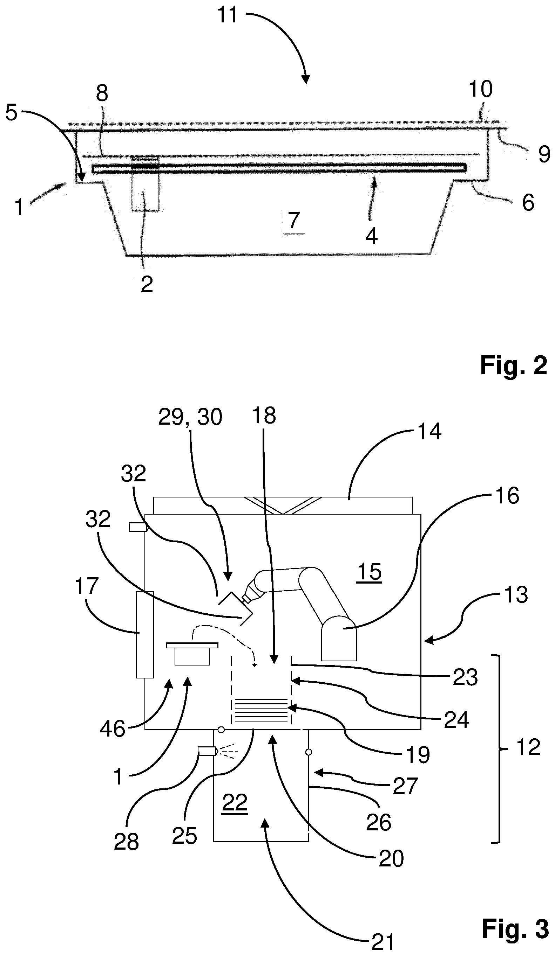

Die Figuren 1 und 2 zeigen unterschiedliche Ansichten eines Gebindes 1 von pharmazeutischen Behältern 2, hier beispielhaft als Vials.

Die Behälter 2 sind unbefüllt und sind in Aufnahmen 3 eines Nests 4 angeordnet.

Das Nest 4 ist auf eine Auflage 5 eines Tubs 6 eingesetzt und füllt einen Innenraum 7 aus.

Auf die eingelegten Behälter 2 ist eine Zwischeneinlage 8 aufgelegt, so dass alle Behälter 2 abgedeckt sind. Diese Zwischeneinlage 8 ist aus einem vorzugsweise nicht-gewebten (non-woven) Material, beispielsweise Tyvek oder sonstigem Vliesstoff, beispielsweise einem Produkt eines Verdampfungsspinvliesverfahrens, gefertigt. Die Zwischeneinlage ist insbesondere undurchlässig für Mikroorganismen, kann jedoch von Dampf und insbesondere gasförmigem und/oder vernebeltem Wasserstoffperoxid durchdrungen werden.

Das Tub 6 weist einen umlaufenden Rand 9 auf, mit dem eine Abdeckung 10 vorzugsweise stoffschlüssig verbunden ist.

Die Abdeckung 10 ist ähnlich oder gleich zu der Zwischeneinlage 8 aus semipermeablen Material, insbesondere aus einem Material, das Mikroorganismen abhält, aber Dekontaminationsmittel gasförmiger und/oder vernebelter Form durchlässt, gefertigt. Auch hier ist bevorzugt ein Vliesstoff eingesetzt, insbesondere das in einem Verdampfungsspinvliesverfahren hergestellte Produkt Tyvek der Firma DuPont.

Das Tub 6 und die Abdeckung 10 bilden somit die Verpackung für die unbefüllten Behälter 2.

Bei weiteren Ausführungsbeispielen wird eine gasdichte Abdeckung 10 verwendet.

Die Figuren 3-5 zeigen unterschiedliche Arbeitszustände einer erfindungsgemäßen, im Ganzen mit 12 bezeichneten Ausschleusevorrichtung.

Die Ausschleusevorrichtung 12 ist Teil einer kontrollierten Umgebung 13. Im Ausführungsbeispiel ist die kontrollierte Umgebung 13 als Isolator gezeigt.

In weiteren Ausführungsbeispielen kann die kontrollierte Umgebung 13 beispielsweise als RABS vom offenen oder geschlossenen Typ realisiert sein.

Die kontrollierte Umgebung 13 hat in an sich bekannter Weise eine Luftzufuhr 14 zur Erzeugung einer Laminarströmung 35 in einen Innenraum 15 der kontrollierten Umgebung.

In dem Innenraum ist eine Verarbeitungsstation 16 (hier eine Roboter- oder Handlingeinheit 45) angeordnet, mit welcher pharmazeutische Gebinde 1 (Figur 1 und 2), die durch einen Zugang 17 in die kontrollierte Umgebung 13 erbracht wurden, ausgepackt werden können.

Die Verarbeitungstation 16 entfernt hierbei zumindest die Abdeckung 10 und optional auch die Zwischeneinlage 8, die in einem Abwurfbereich 18 als separiertes Abfallmaterial 19 gesammelt werden.

Die Ausschleusevorrichtung 12 weist eine Transferöffnung 20 auf, mit welcher das Abfallmaterial 19 aus dem Innenraum 15 der kontrollierten Umgebung 13 bringbar ist.

Hinter der Transferöffnung 20 ist ein Entnahmebereich 21 ausgebildet, in den das separierte und gesammelte Abfallmaterial 19 nach Durchqueren der Transferöffnung 20 gelangt.

Dieser Entnahmebereich 21 ist in einer weiteren kontrollierten Umgebung 22, beispielsweise eine Vorkammer, ausgebildet. Diese weitere kontrollierte Umgebung 22 ist durch die luftdicht verschließbare Transferöffnung 20 von der kontrollierten Umgebung 13, beispielsweise der Arbeitskammer, abtrennbar und ist auch nach außen abgetrennt eingerichtet, insbesondere beispielsweise luftdicht verschlossen, um definierte Umgebungsbedingungen in der weiteren kontrollierten Umgebung 22 einzustellen bzw. aufrechtzuerhalten.

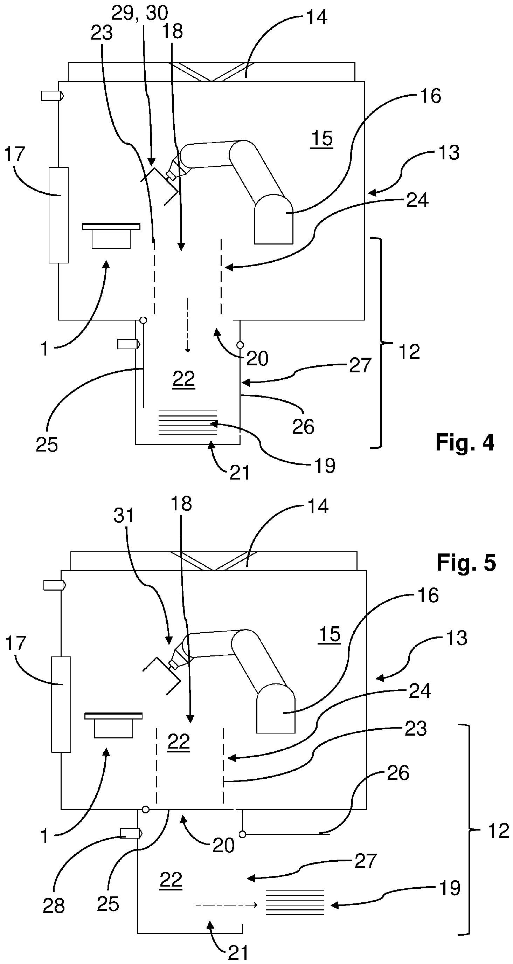

Figur 4 zeigt, dass sich die Transferöffnung 20 öffnen lässt, so dass in geöffnetem Zustand das Abfallmaterial 19 aus dem Abwurfbereich 18 in den Entnahmebereich 21 überführt wird.

Es ist in Figur 3 ersichtlich, dass das Abfallmaterial 19 flächig ausgebildet ist und somit zwei größte Abmessungen, hier die horizontalen Abmessungen, aufweist, die auf eine Kontur der Transferöffnung 20 derart abgestimmt ist, dass das Abfallmaterial 19 ohne Verformungen durch die Transferöffnung 20 passt.

Die kleinste Abmessung jedes Blattes des Abfallmaterials 19 ist hierbei um ein Vielfaches kleiner, beispielsweise um ein zweihundertfaches oder ein fünfhundertfaches, als die eine lichte Weite der Transferöffnung 20.

Der Abwurfbereich 18 ist durch einen Sammelkorb 23 von dem übrigen Innenraum 15 abgegrenzt. Dies ermöglicht es, die abgeworfenen Abfallmaterialien 19 als Stapel zu sammeln.

Dieser Sammelkorb 23 ist, wie aus Figur 4 ersichtlich ist, nach unten offen ausgebildet.

Der Sammelkorb 23 hat seitlich eine Vielzahl von seitlichen Öffnungen 24, durch die Luft entweichen kann. Dies begünstigt das (kontrollierte) Fallen der separierten Abfallmaterialien 19 auf den Stapel.

Die Ausschleusevorrichtung 12 hat ein hier als schwenkbare Klappe ausgebildetes Verschlusselement 25, das nach außen, hier nach unten, verschwenkbar ist und das eine Ablage in Form eines Bodens des Abwurfbereichs 18 (und des Sammelkorbs 23) bildet.

Öffnet sich das Verschlusselement 25, so fällt der gesammelte Stapel von Abfallmaterialien 19 nach unten in den Entnahmebereich 21.

Bei einem weiteren Ausführungsbeispiel kann das Verschlusselement 25 auch verfahrbar, beispielsweise wie eine Schiebetür, oder formändernd, beispielsweise wie eine Irisblende, sein.

Im Anschluss wird das Verschlusselement 25 wieder geschlossen (Figur 5).

Die weitere kontrollierte Umgebung 22 hat eine Tür 26, die sich nach außen öffnen lässt, wie dies Figur 5 zeigt.

Bei geöffneter Tür 26 kann das Abfallmaterial 19 aus den Entnahmebereich 21 nach außen entnommen werden.

Die Tür 26 verschließt hierbei luftdicht eine Öffnung 27, durch die der Entnahmebereich 21 von außen zugänglich ist, um das Abfallmaterial 19 zu entnehmen.

Wird die Tür 26 wieder verschlossen, so ergibt sich erneut die Situation gemäß Figur 3.

Die weitere kontrollierte Umgebung 22 kann hierbei mit einer Dekontaminationsvorrichtung 28 versehen sein, mit welcher die weitere kontrollierte Umgebung 22 nach der Entnahme des Abfallmaterials 19 wieder dekontaminierbar ist, bevor die Transferöffnung 20 erneut geöffnet wird.

Der Entnahmebereich 21 ist hierbei im Einwirkbereich der Dekontaminationsvorrichtung 28.

Die Dekontaminationsvorrichtung ist hierbei mit dem Verschlusselement 25 und der Tür 26 derart gekoppelt, dass sie bei geöffnetem Verschlusselement 25 und/oder bei geöffneter Tür 26 nicht aktivierbar ist, sondern die Funktion gesperrt ist.

Somit kann sichergestellt werden, dass das Dekontaminationsmittel der Dekontaminationsvorrichtung 28 nicht versehentlich durch die Öffnung 27 oder die Transferöffnung 20 gelangt.

Die Verarbeitungsstation 16 weist ein Werkzeug 29 auf, mit dem die Abdeckung 10 geöffnet und entfernt werden kann. Hierzu weist das Werkzeug 29 neben einem Schneider auch einen Greifer 30 auf.

Der Greifer 30 dient nicht nur zum Separieren der Abdeckung 10, sondern auch zur Entnahme der Zwischeneinlage 8.

Hierzu hat die Verarbeitungstation 16 eine nicht weiter dargestellte Unterdruckeinheit 31, mit der Saugnäpfe zum Greifen der separierten Abfallmaterialien 19 möglich ist.

Das Separieren der Abfallmaterialien und eine spätere Entnahme von Behältern 2 aus dem Tub 6 (vgl. Fig. 1 und 2) findet in einem Verarbeitungsbereich 46 statt.

In Bezug auf eine Luftströmungsrichtung, die zumindest durch die Luftzufuhr 14 definiert ist, ist der Entnahmebereich 21 dem Abwurfbereich 18 nachgelagert.

Der erwähnte Greifer 30 weist wenigstens zwei Greifpunkte 32 auf, mit denen auch das bereits beschriebene Nest 4 entnehmbar ist. Hierzu kann durch eine Relativbewegung der Greifpunkte 32 gegeneinander eine Greifweite eingestellt werden, da das Nest 4 und/oder die Zwischeneinlage 8 Abmessungen aufweisen muss/müssen als die separierte Abdeckung 10.

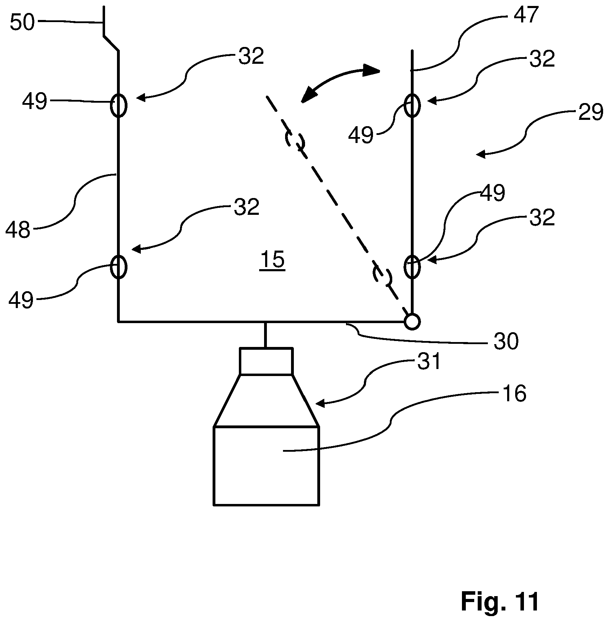

Fig. 11 zeigt den Greifer 30 mit den Greifpunkten 32. Ein Greifarm 47, der beweglich ist, wodurch die Greifweite zu dem unbeweglichen Greifarm 48 durch Schwenken des beweglichen Greifarms 47 eingestellt werden kann.

Jeder Greifarm 47, 48 trägt Saugnäpfe 49, die an die Unterdruckeinheit 31 über Schläuche angeschlossen ist.

Am unbeweglichen Greifarm 48 ist ein Schneider 50 angeordnet, mit dem die Abdeckung 10 ausgeschnitten werden kann.

Aus dem Bewegungsablauf der Figuren 3-5 sieht man weiter, dass die Transferöffnung 20 vor und nach dem Ausbringen des Abfallmaterials 19 aus dem Abwurfbereich 18 in den Entnahmebereich 21 geschlossen wird. Dieses Schließen erfolgt automatisch und stellt sicher, dass keine Querkontamination von der weiteren kontrollierten Umgebung 22 in die kontrollierte Umgebung 13 stattfindet.

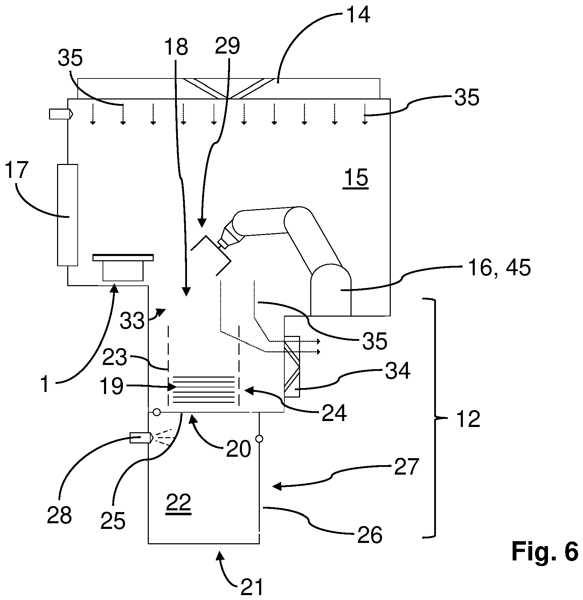

Die Figur 6 zeigt ein weiteres erfindungsgemäßes Ausführungsbeispiel. Konstruktiv und/oder funktionell zu den vorangegangenen Ausführungsbeispielen gleichartige oder identische Bauteile und Funktionseinheiten sind mit denselben Bezugszeichen bezeichnet und nicht noch einer gesondert beschrieben. Die Ausführungen zu dem vorangehenden Ausführungsbeispiel gelten daher für Figur 6 entsprechend.

Das Ausführungsbeispiel gemäß Figur 6 unterscheidet sich von dem vorangehenden Ausführungsbeispiel dadurch, dass der Abwurfbereich 18 in einer Mulde 33 angeordnet ist, die mit einer Luftabführung 34 versehen ist. Die Luftabführung 34 wirkt mit der Luftzufuhr 14 zusammen, um eine definierte Laminarströmung 35 zu erzeugen die eine Kontamination der geöffneten Verpackungen 11 durch Partikel von dem Abfallmaterial 19 unmöglich macht.

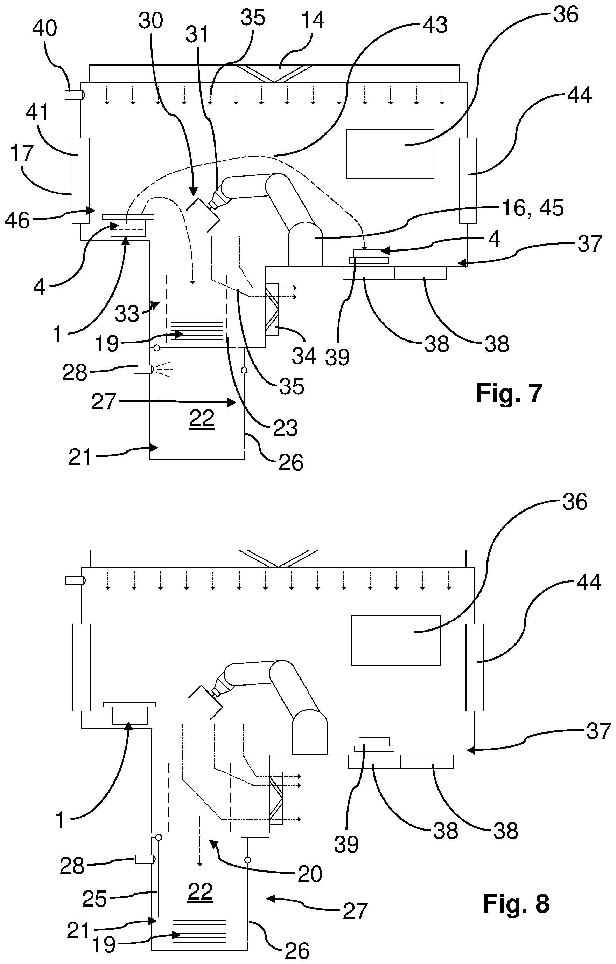

Die Figuren 7 und 8 zeigen ein weiteres erfindungsgemäßes Ausführungsbeispiel. Konstruktiv und/oder funktionell zu den vorangegangenen Ausführungsbeispielen gleichartige oder identische Bauteile und Funktionseinheiten sind mit denselben Bezugszeichen bezeichnet und nicht noch einer gesondert beschrieben. Die Ausführungen zu dem vorangehenden Ausführungsbeispiel gelten daher für Figur 7-8 entsprechend.

Das Ausführungsbeispiel gemäß Figur 7-8 unterscheidet sich von den vorausgehenden Ausführungsbeispielen weitere dadurch, dass im Innenraum 15 der kontrollierten Umgebung 13 eine Befüllstation 36 dargestellt ist.

Die Figuren 7 und 8 zeigen außerdem den Hauptstrang 43 der Verarbeitung der pharmazeutischen Behälter 2.

Der Hauptstrang 43 führt von dem Zugang 17 vorbei an der Befüllstation 36 und weiteren, nicht weiter dargestellten Bearbeitungsstationen wie Verschließstation, Prüfstation, Crimpstation, Beschriftungsstation und dergleichen, zu dem Ausgang 44. Den Transport der Behälter 2, die auf diese Weise befüllt und verschlossen und gesichert und beschriftet werden, besorgt das Transportsystem 37 mit den Transporteinheiten 39.

Außerdem zeigen die Figuren 7-8 ein Transportsystem 37 mit außerhalb der kontrollierten Umgebung 13 angeordneten Magnetfelderzeuger 38 und innerhalb der kontrollierten Umgebung 13 angeordneten Transporteinheiten (Movern) 39 die durch die Magnetfelderzeuger 38 magnetisch levitiert und kontrolliert zu und von der Befüllstation 36 bewegt werden können.

Die Verarbeitungsstation 16 ist so eingerichtet, dass die Behälter 2 aus dem Tub 6 herausgenommen und auf die Transporteinheiten 39 aufgesetzt werden können. Von dort werden sie der weiteren Verarbeitung im Hauptstrang 43 zugeführt.

Auch die kontrollierte Umgebung 13 weist eine Dekontaminationsvorrichtung 40 auf, mit welcher der Innenraum 15 dekontaminierbar ist.

Der Zugang 17 ist außerdem mit einer Dekontaminationsvorrichtung 41 ausgerüstet, die auch oder nicht auf Wasserstoffperoxid-Basis arbeitet, sondern mittels energiereicher Bestrahlung, beispielsweise UVC-Strahlung, arbeitet.

Diese Dekontaminationsvorrichtung 41 kann verwendet werden, um die Abdeckung 10 an der Verpackung 11 zu dekontaminieren. Der Rest der Verpackung (das Tub) kann bei einem weiteren Ausführungsbeispiel außerhalb der kontrollierten Umgebung 13 am Zugang 17 angedockt verbleiben.

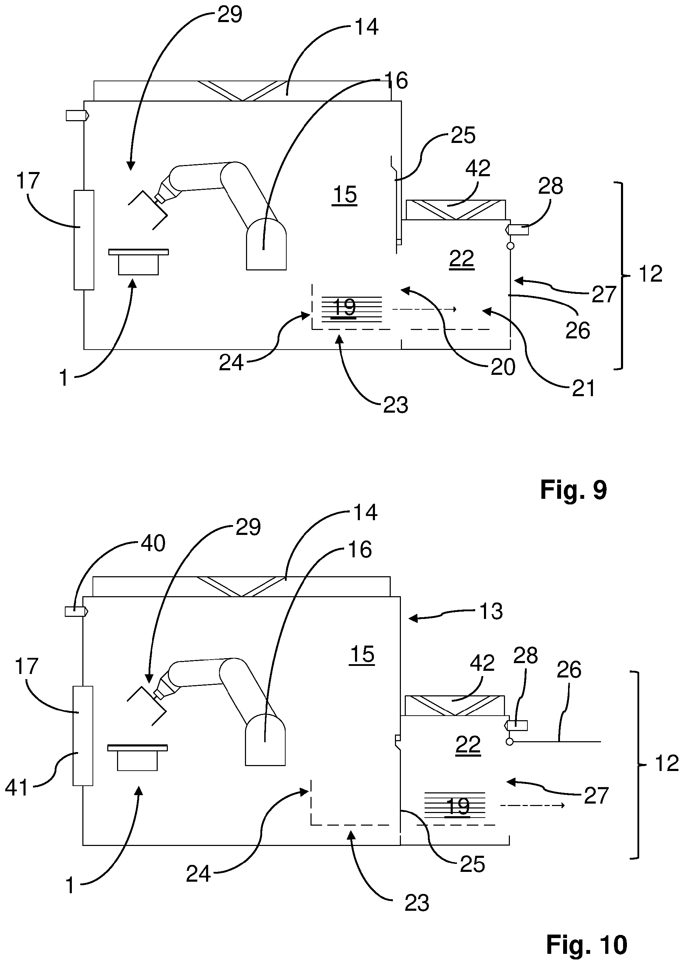

Die Figuren 9 und 10 zeigen ein weiteres Ausführungsbeispiel der Erfindung in unterschiedlichen Arbeitspositionen. Gleichartige oder identische Bauteile und Funktionseinheiten sind wieder mit denselben Bezugszeichen bezeichnet und nicht noch einmal gesondert beschrieben. Die Ausführungen zu den vorangehenden Ausführungsbeispielen entgegen gelten daher bei den Figuren 9 und 10 entsprechend.

Die Figuren 9 und 10 zeigen den Fall, indem das Abfallmaterial 19 nicht nach unten fällt, sondern in horizontaler Richtung aus der kontrollierten Umgebung 13 verbracht werden. Das Verschlusselement 25 ist hierbei als eine Schiebetür ausgebildet.

Die weitere kontrollierte Umgebung 22 kann eine eigene weitere Luftzufuhr 42 aufweisen, die die Umgebungsparameter der weiteren kontrollierten Umgebung 22 definiert.

Bei einer Ausschleusevorrichtung 12, mit der separierbares Abfallmaterial aus einer kontrollierten Umgebung 13 bringbar ist, wird erfindungsgemäß somit vorgeschlagen, dass eine Transferöffnung 20, die einen Abwurfbereich 18 von einem Entnahmebereich 21 für den Weg des Abfallmaterials 19 nach außen trennt, durch ein Verschlusselement 25 im Betrieb verschließbar ist, insbesondere um das Abfallmaterial 19 in einer Stapelanordnung zu sammeln.

### Bezugszeichenliste

- 1: Gebinde
- 2: Behälter
- 3: Aufnahme
- 4: Nest
- 5: Auflage
- 6: Tub
- 7: Innenraum
- 8: Zwischeneinlage
- 9: Rand
- 10: Abdeckung
- 11: Verpackung
- 12: Ausschleusevorrichtung
- 13: kontrollierte Umgebung
- 14: Luftzufuhr
- 15: Innenraum
- 16: Verarbeitungsstation
- 17: Zugang
- 18: Abwurfbereich
- 19: Abfallmaterial
- 20: Transferöffnung
- 21: Entnahmebereich
- 22: weitere kontrollierte Umgebung
- 23: Sammelkorb
- 24: Öffnung
- 25: Verschlusselement
- 26: Tür
- 27: Öffnung
- 28: Dekontaminationsvorrichtung
- 29: Werkzeug
- 30: Greifer
- 31: Unterdruckeinheit
- 32: Greifpunkt
- 33: Mulde
- 34: Luftabführung
- 35: Laminarströmung
- 36: Befüllstation
- 37: Transportsystem
- 38: Magnetfelderzeuger
- 39: Transporteinheit
- 40: Dekontaminationsvorrichtung
- 41: Dekontaminationsvorrichtung
- 42: Luftzufuhr
- 43: Hauptstrang
- 44: Ausgang
- 45: Roboter- oder Handlingsystem
- 46: Verarbeitungsbereich
- 47: (beweglicher) Greifarm
- 48: (unbeweglicher) Greifarm
- 49: Saugnapf
- 50: Schneider

## Patentansprüche

1. Ausschleusevorrichtung (12), mit einer kontrollierten Umgebung (13), wobei innerhalb der kontrollierten Umgebung (13) wenigstens eine Verarbeitungsstation (16) angeordnet ist, wobei ein Abwurfbereich (18) für durch die Verarbeitungsstation (16) separiertes Abfallmaterial (19) ausgebildet ist, wobei außerhalb der kontrollierten Umgebung (13) ein Entnahmebereich (21) ausgebildet ist, wobei zwischen dem Abwurfbereich (18) und dem Entnahmebereich (21) eine Transferöffnung (20) für das Abfallmaterial (19) ausgebildet ist, **dadurch gekennzeichnet, dass** der Entnahmebereich (21) in einer weiteren kontrollierten Umgebung (22) ausgebildet ist und dass die Transferöffnung (20) vorzugsweise luftdicht verschließbar ist.

2. Ausschleusevorrichtung (12) nach Anspruch 1, **dadurch gekennzeichnet, dass** die Verarbeitungsstation (16) zur Separierung von Abfallmaterial (19), das jeweils drei räumliche Abmessungen aufweist, ausgebildet ist, wobei eine Kontur der Transferöffnung (20) auf zwei größte Abmessungen des Abfallmaterials (19) abgestimmt ist und/oder eine kleinste Abmessung des Abfallmaterials (19) einen Bruchteil von einer minimalen lichten Weite der Transferöffnung (20) beträgt, insbesondere ist die minimale lichten Weite wenigstens ein 200-faches, vorzugsweise wenigstens ein 500-faches der kleinsten Abmessung des Abfallmaterials (19) und/oder dass der Abwurfbereich (18) durch einen Sammelkorb (23), welcher vorzugsweise nach unten offen ist, begrenzt ist und/oder dass der Sammelkorb (23) wenigstens eine seitliche Öffnung hat.

3. Ausschleusevorrichtung (12) nach einem der vorangehenden Ansprüche, **dadurch gekennzeichnet, dass** ein Verschlusselement (25) der Transferöffnung (20) eine Ablage, insbesondere als ein Boden des oder eines Sammelkorbs (23), des Abwurfbereichs (18) bildet und/oder dass das oder ein Verschlusselement (25) der Transferöffnung (20) in Bezug auf die kontrollierte Umgebung (13) nach außen öffnet, insbesondere schwenkt und/oder dass das Abfallmaterial (19) eine vorzugsweise semipermeable Folie, vorzugsweise aus Tyvek, ist, welche von einem Tub (6) separiert wurde und/oder dass die kontrollierte Umgebung (13) einen verschließbaren Zugang aufweist, an welche von außen eine mit dem Abfallmaterial (19), insbesondere mit einer Abdeckung (10), verschlossene Verpackung(11), insbesondere ein Tub (6), präsentierbar, insbesondere andockbar ist.

4. Ausschleusevorrichtung (12) nach dem Oberbegriff von Anspruch 1 oder nach einem der vorangehenden Ansprüche, **dadurch gekennzeichnet, dass** der Entnahmebereich (21) im Einwirkbereich einer Dekontaminationsvorrichtung (28) angeordnet ist, insbesondere wobei der Entnahmebereich (21) in der oder einer weiteren kontrollierten Umgebung (22) ausgebildet ist.

5. Ausschleusevorrichtung (12) nach einem der vorangehenden Ansprüche, **dadurch gekennzeichnet, dass** die Dekontaminationsvorrichtung (28) bei verschlossener Transferöffnung (20) aktivierbar ist und/oder dass die Dekontaminationsvorrichtung (28) bei geöffneter Transferöffnung (20) gesperrt ist und/oder dass der Entnahmebereich (21) tiefer als der Abwurfbereich (18), insbesondere unterhalb des Abwurfbereichs (18), angeordnet ist und/oder dass der Entnahmebereich (21) in Bezug auf eine Luftströmungsrichtung der kontrollierten Umgebung (13) dem Abwurfbereich (18) nachgelagert ist und/oder dass der Entnahmebereich (21) durch eine vorzugsweise luftdicht verschließbare Öffnung (24) von außen zugänglich ist und/oder dass die Verarbeitungsstation (16) ein Werkzeug (29), insbesondere einen Schneider (50) und/oder einen Greifer (30), zur Separierung des Abfallmaterials (19), vorzugsweise einer Abdeckung einer Verpackung (11), aufweist und/oder dass der Abwurfbereich (18) mehrere Stücke von Abfallmaterialien (19), insbesondere gestapelt, aufnehmen und/oder bevorraten kann.

6. Ausschleusevorrichtung (12) nach einem der vorangehenden Ansprüche, wobei ein Hauptstrang (43) des Materialflusses definiert ist und in dem Hauptstrang (43) wenigstens eines, insbesondere mehrere oder alle, der nachstehenden Merkmale ausgebildet sind:
- wenigstens eine magnetisch levitierbare Transporteinheit (39),
- wenigstens eine Befüllstation (36),
- wenigstens eine Dekontaminationsvorrichtung (41), insbesondere mit energiereicher Bestrahlung, von zumindest Teilen des Abfallmaterials (19) vor der Separierung,
- der Hauptstrang (43) ist zur Ausführung eines pharmazeutischen Prozesses, insbesondere einer Verarbeitung pharmazeutischer Behälter (2), ausgebildet.

7. Ausschleusevorrichtung (12) nach einem der vorangehenden Ansprüche, **dadurch gekennzeichnet, dass** die Verarbeitungsstation (16) einen Greifer (30) mit einer veränderlichen Greifweite, insbesondere durch eine Relativbewegung von wenigstens zwei Greifpunkten (32) zueinander, und/oder eine Unterdruckeinheit (31) zur Erzeugung von Unterdruck an dem oder einem Greifer (30), hat.

8. Verfahren zur Ausschleusung von Abfallmaterial (19), das in einer kontrollierten Umgebung (13) separiert wird, wobei das Abfallmaterial (19) durch eine Transferöffnung (20) aus der kontrollierten Umgebung (13) verbracht wird, **dadurch gekennzeichnet, dass** das Abfallmaterial (19) vor der Transferöffnung (20) gesammelt, insbesondere als Stapelanordnung, insbesondere wobei das Abfallmaterial (19) anschließend insbesondere gemeinsam aus der kontrollierten Umgebung (13) verbracht wird.

9. Verfahren nach dem vorangehenden Anspruch, **dadurch gekennzeichnet, dass** die Transferöffnung (20) zwischen zwei aufeinander folgenden Ausschleusungen vorzugsweise automatisch geschlossen wird und/oder dass das Abfallmaterial (19) vor der Verbringung durch die Transferöffnung (20) auf einer Ablage (5), insbesondere auf einem Verschlusselement (25) der Transferöffnung (20), gesammelt wird und/oder dass der Entnahmebereich (21) vor Entnehmen des Abfallmaterials (19) gegen die kontrollierte Umgebung (13) vorzugsweise automatisch verschlossen wird, wobei das Abfallmaterial (19) in einen Entnahmebereich (21) hinter der Transferöffnung (20) verbracht wird.

10. Verfahren nach einem der vorangehenden Ansprüche, wobei das Abfallmaterial (19) in einen Entnahmebereich (21) hinter der Transferöffnung (20) verbracht und von dort nach außen entnommen wird, **dadurch gekennzeichnet, dass** der Entnahmebereich (21) nach Entnehmen des Abfallmaterials (19), vorzugsweise bei verschlossener Transferöffnung (20), dekontaminiert wird.

11. Verfahren nach einem der vorangehenden Ansprüche, **dadurch gekennzeichnet, dass** das Abfallmaterial (19), insbesondere als Abdeckung (10) und/oder Zwischeneinlage und/oder Inhalt, von einer Verpackung (11), insbesondere einem Tub (6), separiert wird und/oder dass die Separierung des Abfallmaterials (19) automatisiert, vorzugsweise durch einen Roboter oder Handlingssystem (45), erfolgt und/oder dass während der Ausbringung des Abfallmaterials (19) zuerst das Verschlusselement (25) verschlossen und anschließend eine Tür des oder eines Entnahmebereichs (21) vorzugsweise nach außen geöffnet wird.

12. Verfahren nach einem der vorangehenden Ansprüche, **dadurch gekennzeichnet, dass** zwischen dem Entfernen des Abfallmaterials (19) und dem Entnehmen des Abfallmaterials (19) aus dem Entnahmebereich (21) zumindest ein, insbesondere mehrere oder alle, der folgenden Schritte durchgeführt wird/werden:
a. Greifen des Abfallmaterials (19) zumindest während der Separierung,
b. Bewegen des Abfallmaterials (19) zum Abwurfbereich (18), insbesondere zu dem oder einem Sammelkorb (23), vorzugsweise mittels Roboter oder Handlingeinheit,
c. Lagerung, vorzugsweise in dem oder einem Sammelkorb (23), vorzugsweise im Abwurfbereich (18),
d. Öffnen eines die Transferöffnung (20) verschließenden Verschlusselements (25) nach außen.
e. vertikales Durchführen durch ein temporär geöffnetes Verschlusselement (25) der Transferöffnung (20),
f. Verschließen des Verschlusselements (25),
g. Öffnen einer den Entnahmebereich (21) nach außen abschließenden Tür nach außen,
h. Dekontaminieren einer Außenseite der Transferöffnung (20) .

13. Verfahren nach einem der vorangehenden Ansprüche, **dadurch gekennzeichnet, dass** ein Hauptstrang (43) eines Materialflusses mittels wenigstens einer magnetisch levitierten Transporteinheit (39) befördert wird und/oder dass in dem oder einem Hauptstrang (43) eines Materialflusses wenigstens eine Befüllstation (36) angefahren wird und/oder dass das Abfallmaterial (19) vor der Separation in dem oder einem Hauptstrang (43) des Materialflusses dekontaminiert wird, insbesondere durch energiereiche Bestrahlung, und/oder dass der oder ein Hauptstrang (43) des Materialflusses ein pharmazeutischer Prozess, insbesondere eine Verarbeitung pharmazeutischer Behälter (2), ist.

14. Verfahren nach dem Oberbegriff von Anspruch 8 oder nach einem der vorangehenden Ansprüche, **dadurch gekennzeichnet, dass** das Abfallmaterial (19) mit einem Greifer (30) separiert wird und dass nach der Separierung des Abfallmaterials (19) in dem oder einem Hauptstrang (43) des Materialflusses der Greifer (30) einen weiteren Greifschritt mit einer veränderten Greifweite ausführt, und/oder **dadurch gekennzeichnet, dass** das Abfallmaterial (19) mit einem Greifer (30) separiert wird, wobei ein Unterdruck zum Greifen mit einer Unterdruckeinheit (31) erzeugt wird.

15. Verfahren nach einem der vorangehenden Ansprüche, **dadurch gekennzeichnet, dass** das Abfallmaterial (19) mit seinen zwei größten Abmessungen quer zu einer Transportrichtung und/oder mit seiner kleinsten Abmessung längs der Transportrichtung durch die Transferöffnung (20) aus der kontrollierten Umgebung (13) verbracht wird und/oder dass eine Taktrate des Separierens des Abfallmaterials (19) größer als eine Taktrate einer Ausschleusung des Abfallmaterials (19) ist, insbesondere gleich einem Vielfachen davon.
